# EUROPEAN PATENT APPLICATION

(11) **EP 0 901 804 A1**
(43) Date of publication of application: **17.03.1999**
(21) Application number: 98202775.7
(22) Date of filing: 19.08.1998
(51) Int. Cl.: A63G 1/00, A23D 9/007, A23G 1/00, A23G 3/00, A23G 9/00

(54) **Fat continuous dispersions**

(30) Priority: 12.09.1997 EP 97307108
(71) Applicant: LODERS CROKLAAN B.V., 1521 AX Wormerveer (NL)
(72) Inventor: Cain, Frederick William, 1521 AZ Wormerveer (NL); Zwemmer, Olga Cornelia, 1521 AZ Wormerveer (NL); Hailes, Anne, Sharnbrook, Bedford, MK44 1LQ (GB)
(74) Representative: Sikken, Antonius H. J. M.

(57) **Abstract**

Fat continuous, substantially waterfree dispersions of fat, a particulated sweetener and a viscosity and/or yield value reducing component are obtained by using ≥ 0.005 wt% of a long chain alcohol with ≥ 20 C-atoms in the dispersion.

## Description

Fat continuous dispersions are often applied in food products, typical examples of these products are confectionery compositions such as chocolate or chocolate like compositions but also fillings, both for confectionery and bakery, coatings, sweet spreads, bakery toppings, biscuit creams and ice-cream inclusions and/or coatings are examples hereof.
In many of these products the use of these dispersions have a number of draw backs. Eg it was found that lower fat contents than usual were difficult to achieve. Further uniform layers and coatings could only be obtained with great difficulties, pumping and handling were often problematic, aeration and whipping of the compositions was not always easy, throughputs of fillings made with it were often too low to enable commercial processing, application of coatings on ice creams often led to problems with dry-and dripping times during coating and to too low through puts.

Many of above problems can be attributed to a too high viscosity and/or yield value of the compositions. Attempts to lower these rheological parameters resulted in the finding that the use of a synthetic component (Admul-wol) could improve the rheology, in particular the yield value. However Admul-wol is a product that is only allowed in very small quantities in food and has to be prepared chemically. Therefore a need existed to develop a natural component that could take over the property of lowering the viscosity of fat dispersions that are applied in the confectionery area. These fat dispersions should be fat continuous and at least contain fat, a particulated sweetener and the viscosity reducing component. Further these dispersions should be substantially water free to enable their application in chocolate or chocolate like products.

We therefore performed a study in order to find new fat continuous dispersions with relatively low viscosity and/or yield value at the temperature the dispersions are applied.

Above study resulted in the finding of novel fat continuous, substantially water free dispersions of at least fat, a particulated sweetener and a viscosity reducing component, wherein the sweetener is present for at least 5 wt% while the viscosity/yield value reducing component is present for at least 0.005 wt% and is selected from long chain alcohols with at least 20 C-atoms.

In these dispersions the viscosity/yield value reducing component is a long chain alcohol. Such components per se are known for a number of beneficial health effects, such as their ability to lower blood cholesterol levels. These effects are disclosed in eg EP 654 252 and WO 94/07830. It will be self evident that these effects also will be found for our compositions.
Even the use of these components in health-food products such as stamina cookies, health drinks, Neketsu drink and ginseng is disclosed (cf Comline Biotechn and Med. June 1991, p. 3 and Cosm and Toileteries Aug 1991).
However nothing is disclosed about the use of these components for lowering the viscosity or yield value of fat dispersion containing a sweetener.

Long chain alcohols can be obtained from natural sources such as palm tree, shrubs, cane sugar, cereals, seeds, sheep, insects etc. Commercial products derived from sugar cane, rice bran, sweet sorghum, wheat germ, sunflower seeds are available.

Preferred fat continuous dispersions are those wherein the long chain alcohol with at least 20 C-atoms is present in amounts of 0.005-10 wt%, preferably in amounts of 0.01-8 wt%, more preferably in amounts of 0.02-5 wt%, most preferably in amounts of 0.05-3 wt%.

Preferred viscosity/yield value reducing components are straight chain alcohols with 24-34, most preferably with 26-30 C-atoms. A brief summary of commercially available products, that were tested by us (cf: our examples) is given in the table below:

| Component long-chain alcohols (%) | | | | | | |
|---|---|---|---|---|---|---|
| Sample | C24 | C26 | C28 | C30 | C32 | C34 |
| Garuda (Octacosanol PN) | 2.1 | 8.4 | 67.9 | 12.6 | 5.9 | 3.1 |
| Carnauba | 0.7 | 0.0 | 0.6 | 12.0 | 69.3 | 17.5 |
| Rice bran wax | 9.7 | 11.6 | 17.8 | 25.4 | 19.1 | 16.3 |
| Sugar cane wax | 2.5 | 4.7 | 64.9 | 12.7 | 12.7 | 2.5 |

The sweetener in our dispersion can be present in amounts of 10-80 wt%, preferably in amounts of 20-60 wt%. The sweetener can be selected from the group consisting of: glucose, fructose, sucrose, maltose, lactose, sorbitol, lactitol, mannitol, maltitol, xylitol, maltodextrin and polydextrose.

The fat in our dispersions can be present in amounts of 20-80 wt%, preferably 25-60 wt%.
Preferred fats have a solid fat content (measured by NMR-pulse on a non stabilised fat) of more than 15 at 20 oC, preferably more then 25 and less than 10 at 35 oC, preferably less than 5.
Non stabilised means that the valid fat content was measured after melting at 80 oC, cooling to 0 oC and maintaining fat at measurement T for 30 min.
Very suitable fats are fats from the group consisting of: cocoa butter or fractions thereof, shea or fractions thereof, illipe or fractions thereof, palm oil fractions, palm kernel oil or fractions thereof, polyol poly esters and saturated triglycerides with fatty acid residues with mixed chain length, in particular having 2-12 and 16-24 C-atoms respectively.
The dispersions further can contain the conventional ingredients and additives present in confectionery products.

Chocolate or chocolate-like products comprising a fat continuous dispersion, wherein the fat continuous dispersion is the dispersion of claims 1-8 are also part of our invention. The same applies for confectionery or bakery fillings, sweet spreads, bakery toppings, coatings, biscuit creams or ice-cream inclusions and/or coatings comprising a fat continuous fat dispersion, wherein the fat continuous dispersion is the dispersion of claims 1-8.

Another embodiment of our invention is laid in the use of a viscosity/yield value lowering component in fat continuous dispersions wherein a long chain alcohol with at least 20 C-atoms is applied to lower the viscosity/yield value at working temperature of a fat continuous dispersion comprising particulated sweetener in amounts of more than 5 wt%.

### EXAMPLES

### I. The following recipes were applied:

| | |
|---|---|
| 1. | Dark chocolate (Callebaut) + 5 % cocoa butter |
| 2. | Dark chocolate (Callebaut) + 5 % cocoa butter + 0.1 % Octacosanol* |
| 3. | Dark chocolate(Callebaut) + 5 % cocoa butter + 0.2 % Octacosanol |
| 4. | Dark chocolate (Callebaut) + 5 % cocoa butter + 0.4 % Octacosanol |

| | |
|---|---|
| * Octacosanol is a product from Garuda containing more than 95 wt% long chain alcohol, from which 67.9 wt% is C28 straight chain alcohol. | |

The recipes were prepared by melting the chocolate and adding liquid cocoa butter. The Octacosanol was added to the different batches. The chocolates were stored at 60 °C for 1 hr, and then at 50 °C for 24 hours.

The viscosities (η) and yield values (τₒ) were measured in a Haake Rotoviscometer (system MV-2). The shear rate regime applied was: 10 min at 6.7 r.p.m, followed by 0 to 30 r.p.m within 2 min.
Results obtained are:

| Sample | τₒ at 50 °C in PA | η at 50 °C in Pas |
|---|---|---|
| 1 | 9.8 | 0.33 |
| 2 | 7.5 | 0.33 |
| 3 | 7.2 | 0.30 |
| 4 | 6.8 | 0.28 |

The chocolates were tempered in a Leatherhead-kettle, and bars were moulded.

Bars made from above chocolate demonstrated that the bloom performance and the gloss of the products based on samples 2-4 were similar to the bloom and gloss of the reference (=sample 1).

From above it can be concluded that the addition of Octacosanol has a clear benifit on the viscosity and yield value at 50 °C. This made the handling of the chocolate far easier.

### II. We repeated above procedure, using Callebaut without the 5% cocoabutter, adding 0 and 0.4 wt% of the octacosanol. The results were:

| | τₒ | η |
|---|---|---|
| Callebaut | 13.6 | 0.46 |
| Callebaut + 0.4% policosanol | 8.3 | 0.33 |

### III. Two comparative recipes were made, based on the use of hardened oil fractions instead of Octacosanol. Herein the following recipes were applied:

Rec 1: 99.6 Callebaut/0.4% hardened soybean oil
   slip mpt. 65°C
   and
Rec 2: 99.6% Callebaut/0.4% hardened palm oil
   s mpt 58°C

The results obtained were:

| | τ₀ at 50°C | η at 50°C |
|---|---|---|
| Rec 1: | 12.0 | 0.44 |
| Rec 2: | 12.6 | 0.49 |

### IV. The following blends were made:

| | | |
|---|---|---|
| 1. | 100 | Dark Callebaut chocolate |
| 2. | 98.8/0.2 | Dark Callebaut chocolate/long chain alcohol ex Carnauba wax |

Dark Callebaut consists of:
- 45: wt% cocoa mass
- 10.7: wt% cocoa butter
- 43.9: wt% sugar
- 0.38: wt% lecithin
- 0.02: wt% vanilla

The blends were made by melting the chocolate and adding the long chain alcohol as a solid. The chocolate was heated for 4 hours at 70°C to melt the long chain alcohol. The viscosity was measured at 70°C using a Haake Rotovisco RV 20.

| | At 70°C | |
|---|---|---|
| | τ-0 | η |
| Sample 1 | 11.92 | 0.2025 |
| Sample 2 | 10.62 | 0.1956 |

### V The following blends were made:

rec. 1. 99.6/0.4 Dark Callebaut chocolate/long chain alcohol ex Ricebran wax
rec. 2. 99.6/0.4 Dark Callebaut chocolate/ long chain alcohol ex Sugarcane wax

The blends were made by melting the chocolate and adding the long chain alcohol solid. The chocolate was heated for 4 hours at 70°C to melt the long chain alcohol. The chocolate was cooled till 50°C and viscosity was measured at 50°C using a Haake Rotovisco RV 20.

| | At 50°C | |
|---|---|---|
| | τ-0 | η |
| Rec 1 | 7.8 | 0.44 |
| Rec 2 | 7.9 | 0.43 |

## Claims

1. Fat continuous, substantially water free dispersions of at least fat, a particulated sweetener and a viscosity and/or yield value reducing component, wherein the sweetener is present for at least 5 wt% while the viscosity and/or yield value reducing component is present for at least 0.005 wt% and is selected from long chain alcohols with at least 20 C-atoms.

2. Fat continuous dispersion according to claim 1, wherein the long chain alcohol with at least 20 C-atoms is present in amounts of 0.005-10 wt%, preferably in amounts of 0.01-8 wt%, more preferably in amounts of 0.02-5 wt%, most preferably in amounts of 0.05-3 wt%.

3. Fat continuous dispersion according to claims 1 or 2, wherein the viscosity and/or yield value reducing component is a straight chain alcohol with 24-34 C-atoms.

4. Fat continuous dispersions according to claims 1-3, wherein the sweetener is present in amounts of 10-80 wt%, preferably 20-60 wt%.

5. Fat continuous dispersion according to claims 1-4, wherein the sweetener is selected from the group consisting of: glucose, fructose, sucrose, maltose, lactose, sorbitol, lactitol, mannitol, maltitol, xylitol, maltodextrin and polydextrose.

6. Fat continuous dispersion according to claims 1-5, wherein the fat phase is present in amounts of 20-80 wt%, preferably 25-60 wt%.

7. Fat continuous dispersion according to claims 1-6, wherein the fat has a solid fat content (measured by NMR-pulse on a non stabilised fat) of more than 15 at 20 oC, preferably more then 25 and less than 10 at 35 oC, preferably less than 5.

8. Fat continuous dispersion according to claims 1-7 wherein the fat is selected from the group consisting of: cocoa butter or fractions thereof, shea or fractions thereof, illipe or fractions thereof, palm oil fractions, palm kernel oil or fractions thereof, polyol poly esters and saturated triglycerides with fatty acid residues with mixed chain length, in particular having 2-12 and 16-24 C-atoms respectively.

9. Chocolate or chocolate-like products comprising a fat continuous dispersion, wherein the fat continuous dispersion is the dispersion of claims 1-8.

10. Confectionery or bakery fillings, sweet spreads, bakery toppings, coatings, biscuit creams or ice-cream inclusions and/or coatings comprising a fat continuous fat dispersion, wherein the fat continuous dispersion is the dispersion of claims 1-8.

11. Use of a viscosity and/or yield value lowering component in fat continuous dispersions wherein a long chain alcohol with at least 20 C-atoms is applied to lower the viscosity and/or yield value at working temperature of a fat continuous dispersion comprising particulated sweetener in amounts of more than 5 wt%.
